(19)

Europäisches
Patentamt

European
Patent Office

Office européen
des brevets

(11)  **EP 4 667 200 A1**

(12)  **EUROPEAN PATENT APPLICATION**

(43)  Date of publication:
    **24.12.2025  Bulletin 2025/52**

(21)  Application number: **25168210.0**

(22)  Date of filing: **03.04.2025**

(51)  International Patent Classification (IPC):
    ***B29C 70/54*** *(2006.01)*     ***B29C 70/38*** *(2006.01)*
    ***B64C 1/12*** *(2006.01)*     ***B64C 3/26*** *(2006.01)*
    ***B64F 5/60*** *(2017.01)*     ***G01N 21/88*** *(2006.01)*
    ***G01N 21/84*** *(2006.01)*

(52)  Cooperative Patent Classification (CPC):
    **B64F 5/60; B29C 70/30; B29C 70/38;**
    **B29C 70/386; B29C 70/54; B64C 1/12; B64C 3/26;**
    **G01N 21/8803;** G01N 2021/8472

(84)  Designated Contracting States:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Designated Extension States:
    **BA**
    Designated Validation States:
    **GE KH LA MA MD TN**

(30)  Priority:  **21.06.2024  US 202418750050**

(71)  Applicant: **The Boeing Company**
    **Arlington, VA 22202 (US)**

(72)  Inventors:
  • **Wrenn, Katy Marie**
    **Arlington, 22202 (US)**
  • **Jones, Stephen Paul**
    **Arlington, 22202 (US)**
  • **Rock, Yaniv R.**
    **Arlington, 22202 (US)**

(74)  Representative: **Witte, Weller & Partner**
    **Patentanwälte mbB**
    **Postfach 10 54 62**
    **70047 Stuttgart (DE)**

(54)  **AUTOMATED TAPE LAYING MACHINE PANEL MANUFACTURE WITH GUARD BANDS**

(57)  Techniques for manufacturing a composite part using a tape laying process are presented. The techniques can include: laying up a preform layer from composite tape; inspecting the preform layer for gaps; comparing the gap measurement with a gap guard band, where the gap guard band is determined by: obtaining anomaly data that includes measurements of fiber that has not been deposited on a respective preform during prior preform lay-up processes; fitting a multi-component model to the anomaly data; simulating a preform manufacture based on the multi-component model; calculating summary statistics on gap width accounting for undetected anomalies; and determining a guard band based on the summary statistics on gap width accounting for undetected anomalies and based on a manufacturing requirement; determining that the preform layer complies with the manufacturing requirement; repeating the laying up, the inspecting, the comparing, and the determining; and heating the preform to form a composite part.

**FIG. 1**

EP 4 667 200 A1

**Description**

**Field**

This disclosure relates generally to manufacturing composite parts using automated tape laying machines.

**Background**

A carbon fiber composite part, such as an aircraft panel, can be manufactured using a composite tape lay-up process. Such a process can include laying up multiple layers of carbon fiber on top of each other to build up a stack of material.

In a manufacturing environment, many processes involve measuring characteristics against specification requirements to ensure a high quality outgoing product. In complex processes, such as composite tape lay-up, despite best efforts there can be events that result in part anomalies. For example, the measurement system, which can include an automated optical inspection system, might not be able to capture these anomalies in situ, but their effect on the part should be accounted for when assessing the conformity of the product.

Ideally, the causal mechanism of an anomaly would be corrected, but this is not always possible. When anomalies are observed by other means, such as visual inspection, a generally accepted way to address the situation is to rework the part. However, this retroactive strategy can burden the production system, with the extent of the burden being based on factors including the nature of the anomaly, where in the process it is observed, and how frequently it occurs. Moreover, the product can fall well within the specification limits, and anomalies (at a controlled rate) could potentially be accepted without reducing product quality or resulting in a product nonconformance. Hence, if anomalies are not well understood with respect to the requirements, their occurrence can trigger unnecessary rework.

**Summary**

According to various embodiments, a method of manufacturing a composite part using a tape laying process is presented. The method includes: laying up a preform layer from composite tape using a tape laying process; inspecting the preform layer for gaps, from which a gap measurement is obtained; comparing the gap measurement with a gap guard band, wherein the gap guard band is determined by operations comprising: obtaining anomaly data comprising measurements of fiber that has not been deposited on a respective preform during a plurality of prior preform lay-up processes; fitting a multi-component model to the anomaly data; simulating a preform manufacture based on the multi-component model, from which a distribution of anomaly size per preform is determined; calculating, based on the distribution of total anomaly size per preform, summary statistics on gap width per preform accounting for undetected anomalies; and determining a guard band based on the summary statistics on gap width per preform accounting for undetected anomalies and based on a manufacturing requirement; determining, with a known confidence and based on the comparing, that the preform layer complies with the manufacturing requirement; repeating the laying up, the inspecting, the comparing, and the determining, whereby a preform comprising multiple layers is obtained; and heating the preform, wherein a composite part is produced.

Various optional features of the above method embodiments include the following. The method can include manufacturing an aircraft panel from the composite part. The method can include incorporating the aircraft panel into an aircraft wing assembly. The multi-component model can include an anomaly presence model and an anomaly size model. The method can include: determining, with a known confidence and based on the comparing, that a second preform layer does not comply with the manufacturing requirement; and repairing the second preform layer. The inspecting can include automatically inspecting using at least one optical sensor. The anomaly data can include measurements of lengths of fiber that has not been deposited on a preform. The operations can further include determining an upper bound on a length of fiber that has not been deposited. The operations can further determining an upper bound on a proportion of a preform affected by missing, undetected fiber. The determining the summary statistics on gap width per preform can include accounting for missing and undetected fiber in adjacent courses.

According to various embodiments, a system for manufacturing a composite part is presented. The system includes: a tape laying machine that iteratively lays up preform layers from composite tape to manufacture a preform; and an inspection system that inspects each preform layer for gaps, from which a respective gap measurement is obtained, compares the respective gap measurement with a gap guard band, and determines, with a known confidence and based on the comparing, that the preform layer complies with a manufacturing requirement; wherein the gap guard band is determined by operations comprising: obtaining anomaly data comprising measurements of fiber that has not been deposited on a respective preform during a plurality of prior preform lay-up processes; fitting a multi-component model to the anomaly data; simulating a preform manufacture based on the multi-component model, from which a distribution of anomaly size per preform is determined; calculating, based on the distribution of total anomaly size per preform, summary statistics on gap width per preform accounting for undetected anomalies; and determining a guard band based on the summary statistics of gap width per preform accounting for undetected anomalies and based on the manufacturing requirement; and an autoclave that heats the preform, wherein a composite part is produced.

Various optional features of the above system embodiments include the following. An aircraft panel can be manufactured from the composite part. The aircraft panel can be incorporated into an aircraft wing assembly. The multi-component model can include an anomaly presence model and an anomaly size model. The inspection system can determine, with a known confidence and based on the comparing, that a second preform layer does not comply with the manufacturing requirement, wherein the second layer preform layer is repaired. The inspection system can include at least one optical sensor. The anomaly data can include measurements of lengths of fiber that has not been deposited on a preform. The operations can further include determining an upper bound on a length of fiber that has not been deposited. The operations can further include determining an upper bound on a proportion of a preform affected by missing, undetected fiber. The determining the summary statistics on gap width per preform can include accounting for missing and undetected fiber in adjacent courses.

Combinations, (including multiple dependent combinations) of the above-described elements and those within the specification have been contemplated by the inventors and can be made, except where otherwise indicated or where contradictory.

## Brief Description of the Drawings

Various features of the examples can be more fully appreciated, as the same become better understood with reference to the following detailed description of the examples when considered in connection with the accompanying figures, in which:

Fig. 1 illustrates an aircraft that incorporates a wing panel manufactured according to various embodiments;

Fig. 2 shows whiskers and corresponding missing carbon fiber in a wing panel, which can be addressed according to various embodiments;

Fig. 3 shows poly backing being removed from a carbon roll, and whisker on poly backing from a carbon roll, which can be addressed according to various embodiments;

Fig. 4 illustrates a guard band for a one-sided specification requirement, according to various embodiments;

Fig. 5 is a flow diagram that illustrates an overview of a portion of a methodology for manufacturing an aircraft, where the aircraft includes an aircraft panel manufactured by an automated tape laying machine, according to various embodiments;

Fig. 6 is a flow diagram of modeling and simulation process in a methodology for manufacturing an aircraft, where the aircraft includes an aircraft panel manufactured by an automated tape laying machine, according to various embodiments;

Fig. 7 illustrates a whisker occurring on one side and both sides of a course-to-course interface, according to various embodiments;

Fig. 8 depicts a distribution of simulated total whisker length on a panel for 1000 simulated panels; and

Fig. 9 is a flowchart depicting a method of manufacturing an aircraft, where the aircraft includes an aircraft panel manufactured by a tape laying process, according to various embodiments.

## Description of the Examples

Reference will now be made in detail to example implementations, illustrated in the accompanying drawings. Wherever convenient, the same reference numbers will be used throughout the drawings to refer to the same or like parts. In the following description, reference is made to the accompanying drawings that form a part thereof, and in which is shown by way of illustration specific exemplary examples in which the invention can be practiced. These examples are described in sufficient detail to enable those skilled in the art to practice the invention and it is to be understood that other examples can be utilized and that changes can be made without departing from the scope of the invention. The following description is, therefore, merely exemplary.

Some embodiments provide techniques for the manufacture of an end product (e.g., a composite part, which can be, by way of non-limiting example, an aircraft part, such as an aircraft panel) whereby such techniques proactively account for measurement and other uncertainty when assessing the end product against manufacturing requirements. Some embodiments utilize guard bands to safeguard against incorrect decisions about whether the end product (e.g., composite part) conforms to specifications due to sources of uncertainty or uncontrollable variation. For example, some embodiments develop guard bands for lay-up requirements for aircraft wing panels that account for missing composite tape due to whiskers, e.g., pieces of tape left on the poly-backing of composite tape rolls during composite lay-up. Some embodiments capture the bi-modal anomaly distribution of manufacturing data, incorporate uncertainty in sample data, and account for multiple anomaly scenarios at the interface of interest. Some embodiments take advantage of a statistical modeling approach that includes the use of a two-stage hurdle model process and a statistical bootstrapping method for constructing an upper bound on the size of the anomaly. Some embodiments incorporate this quantity into guard bands for composite part lay-up requirements. Thus, some embodiments provide quality control for and, in turn, improve the manufacture of, end products (e.g., composite parts, which can be, by way of non-limiting example, aircraft parts, such as aircraft panels).

These and other feature and advantages are shown and described herein in reference to the figures.

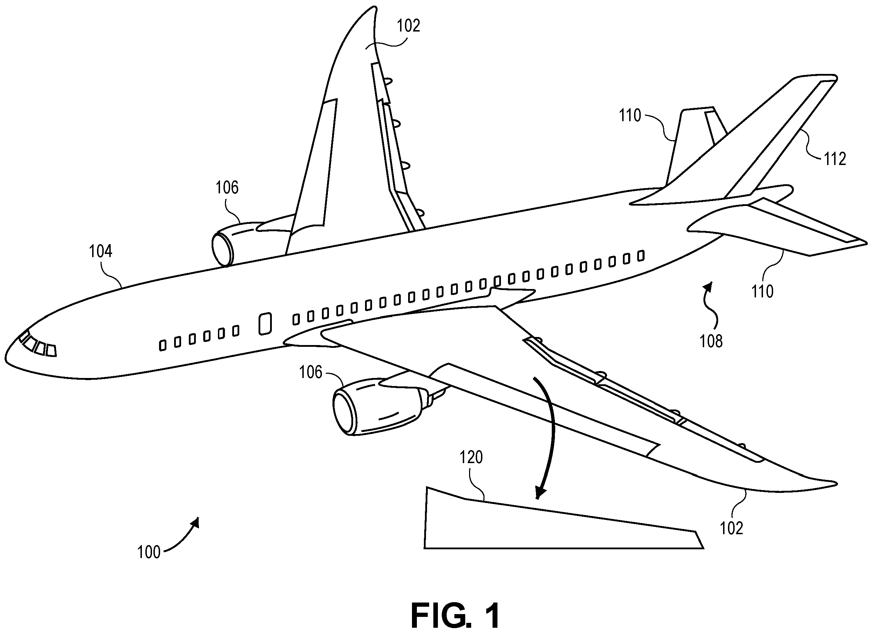

Fig. 1 illustrates an aircraft 100 that incorporates a wing panel manufactured according to various embodiments. That is, the aircraft 100 is an example of an aircraft which can be formed using composite parts, wing panels, and/or wing assemblies produced according to disclosed embodiments. As shown, the aircraft 100 has wings 102 attached to and extending to either side of a fuselage 104. The aircraft 100 includes an engine 106 attached to each wing 102. Disposed at the rear end of fuselage 104 is tail section 108, which includes an opposed pair of horizontal stabilizers 110 and a vertical stabilizer 112. Wings 102 are formed of an upper wing panel 120 and a lower wing panel (not shown) joined together, with an assembly of ribs and spars at least partially forming the interior structure thereof.

The wing panel 120 can be manufactured using a multi-stage process, a non-limiting example of which is described presently. In general, aircraft parts such as wings and wing assemblies can include composite parts. Composite parts, such as carbon fiber reinforced polymer parts, are initially laid-up in multiple layers, referred to as sequences, that together are referred to as a preform. Individual fibers within each layer of the preform are aligned parallel with each other, but different layers exhibit different fiber orientations in order to increase the strength of the resulting composite part along different dimensions. Thus, during layup, multiple plies of unidirectional fiber reinforced material are applied sequentially to build the preform at a desired size and strength. The preform includes or is treated with a viscous resin that solidifies through a heating process in order to harden the preform into a composite part (e.g., for use in an aircraft). The heating can be performed in an autoclave, for example. Carbon fiber can be pre-treated by impregnation with a thermoset or thermoplastic resin, or can be dry, i.e., not previously impregnated with resin (but can include a tackifier or binder). Dry fiber can be infused with resin prior to the heating process.

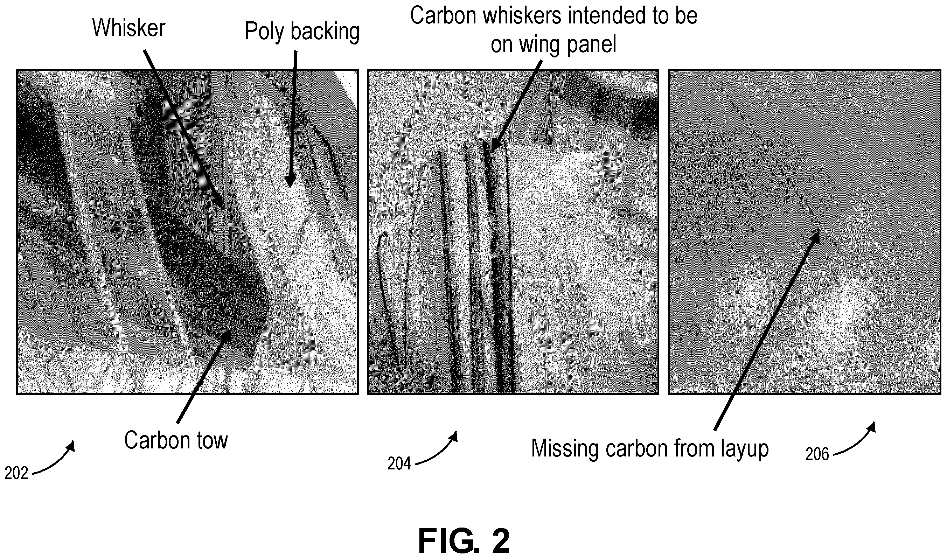

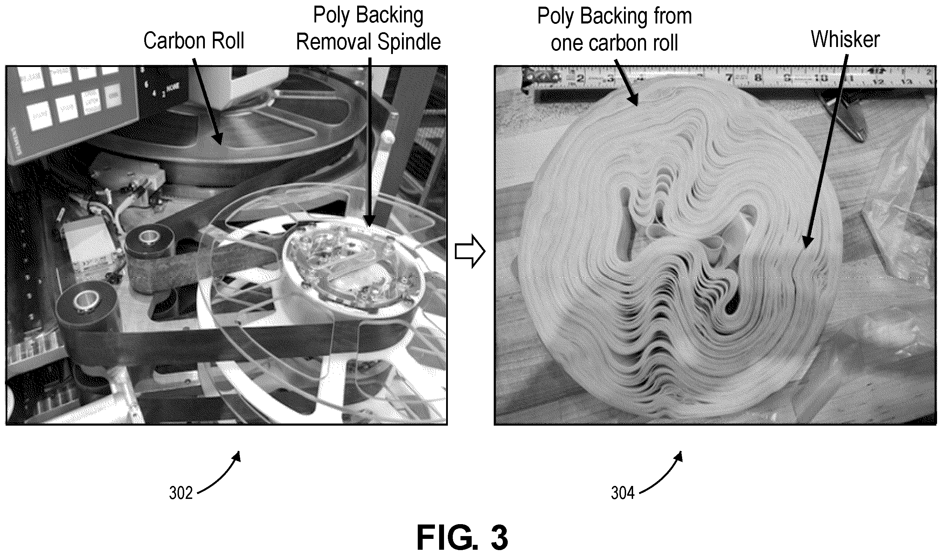

An example wing panel manufacturing process is further shown and described presently in reference to Figs. 2 and 3. In particular, Figs. 2 and 3 illustrate the type of anomalies that embodiments can address.

Fig. 2 shows whiskers and corresponding missing carbon fiber in a wing panel, which can be addressed according to various embodiments. In particular, Fig. 2 shows a whisker 202 of carbon fiber detaching from a tow, multiple whiskers 204 on a poly backing reel, and missing carbon fiber 206 in a wing panel detected during manufacturing inspection.

Fig. 3 shows poly backing 302 being removed from a carbon roll, and whisker 304 on poly backing from a carbon roll, which can be addressed according to various embodiments.

The carbon fiber on poly backing as depicted in Figs. 2 and 3 is used to fabricate wing skins using an automated tape laminating machine (ATLM) in accordance with a manufacturing specification. During the lay-up process, whiskers (e.g., 202, 204, 304) on the edges of the tow remain attached to the poly backing within the lamination head. Despite adjustments to an ATLM, such whiskers and the corresponding missing fiber in a preform can persist, such that complete prevention of whisker occurrence might not be possible. In practice, the majority of whiskers are partial thickness, and the automated optical inspection system used to measure laps and gaps between tows might not be able detect the missing material due to the inability of the sensor to detect the partial thickness change as the tow still appears full width and has a similar profile to an undamaged tow. Hence, the missing material due to whiskers might not be properly accounted for when determining product acceptance against the specification limits. Nevertheless, the damaged tows due to missing material from whiskers can be visually detected during the post layup inspection. When a damaged tow is found, the entire tow might need to be removed and replaced.

Although the whisker anomalies cannot be detected by the inspection system (e.g., lap/gap sensors), they can be accounted for in the lay-up process according to various embodiments. This can be achieved using a guard-banding approach. Thus, some embodiments utilize guard bands, which are offsets to the specification requirements and safeguard against incorrect decisions about the conformity of end product due to sources of uncertainty or uncontrollable variation. The specification requirement can be an upper specification limit (USL) on the maximum allowed gap, for example.

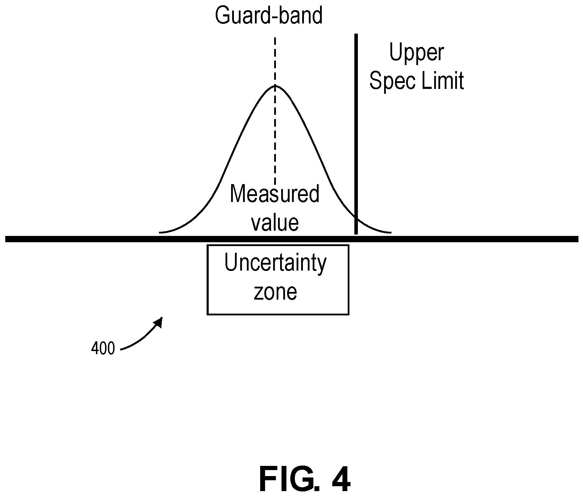

Fig. 4 illustrates a guard band 400 (dotted vertical line) for a one-sided specification requirement (solid vertical line), according to various embodiments. The guard band 400 is adjusted to be lower (or higher depending on the direction of the requirement) than the manufacturing specification requirement, so that if the measured characteristic falls within the guard band, then the true product characteristic meets the specification requirement with some known level of confidence.

In general, deriving guard bands to account for sources of variation in a product can be challenging due to the nature of the anomaly data itself and how anomalies translate to the requirements as they relate to the anomaly. In particular, a manufactured product might experience infrequent anomalies, which is advantageous from the standpoint of first-time quality, but challenging for quantifying the source of variation in the product statistically. Two approaches for modeling anomaly data where many parts or attributes experience no anomalies are: (1) ignore all the anomaly free observations or (2) try to model all the anomaly data as a single distribution. Approach (1) can lead to overly conservative results when few anomalies are present in the anomaly data used to develop guard bands because no "credit" is given for those anomaly-free observations. Approach (2) is inappropriate because the anomaly data is actually mixed modal, and fitting a single distribution can lead to underestimating the anomaly characteristics. Some embodiments avoid using such approaches.

Some embodiments use a hurdle model, which includes a two-stage modeling process. This type of statistical model is used for modeling anomaly data that have an excessive number of zeros (or anomaly-free observations) and involves two components: a first model, which can be a logistic model for determining whether an observation is zero or not, that is, over the "hurdle", and a second model, which can be a regression model of anomaly size for the observations that are non-zero.

Some embodiments develop a guard band for an upper specification limit for the gap size for (by way of non-limiting example) aircraft wing panels that account for missing carbon fiber due to whiskers, that is, strips of carbon tape, as shown and described herein in reference to Figs. 2 and 3. Some embodiments leverage a two-stage hurdle model and a bootstrapping procedure to develop upper bounds on the anomaly size. This disclosure details how these estimates can be incorporated into guard bands for composite lay-up specification requirements, including assumptions regarding the presence of multiple anomalies in a composite lay-up sequence and scenarios for bounding the guard bands.

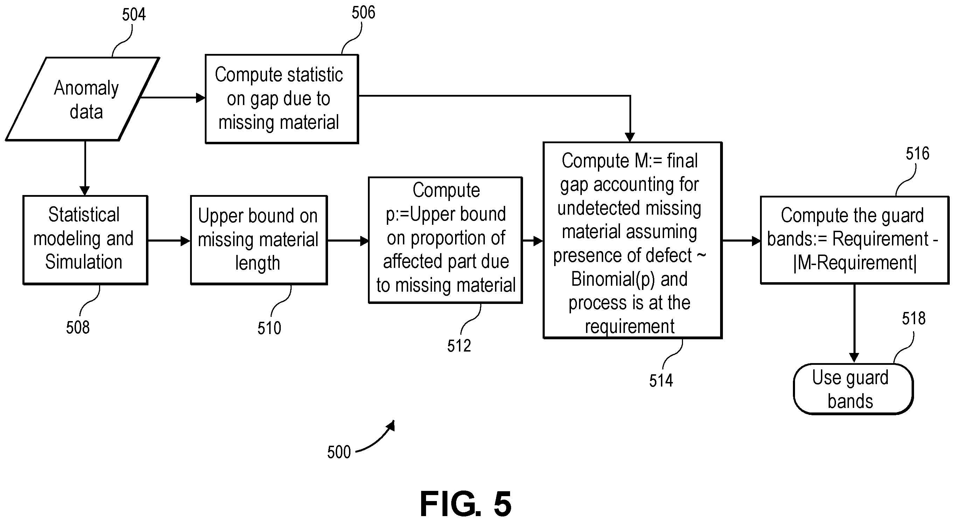

Fig. 5 is a flow diagram that illustrates an overview of an example portion of a method 500 for manufacturing an aircraft, where the aircraft includes an aircraft panel manufactured by an automated tape laying machine, according to various embodiments. The method 500 is described throughout the remainder of this disclosure, and uses non-limiting example values for certain parameters described herein (e.g., for the anomaly data of 504). The method 500 can be computer-implemented, due to the impracticality of performing the operations otherwise. Note that the overall method 500 can include various actions, steps, and operations prior to step 504 shown in Fig. 5.

At 504, the method 500 includes obtaining anomaly data. The anomaly data can be obtained as measurements of fiber that has not been deposited on a preform during preform lay-up processes. The fiber that has not be deposited can be detected as whiskers present on poly backing after completion of the lay-up process, e.g., as shown and described herein in reference to Figs. 2 and 3. Thus, the anomaly data can include whisker measurements, as described in detail presently. In particular, and by way of illustration rather than limitation, example anomaly data (e.g., 504) can be collected as described presently and summarized in Table 1.

Table 1: Example Anomaly Data

| Total Number of Rolls | Rolls with Whiskers | Percent Rolls with Whiskers | Whisker Weight (oz) | Width of uniform gap if all whiskers appear at course edge (in)^ |
|---|---|---|---|---|
| 800 | 245 | 30.6 | 14.07 | 0.054 |

^The width of uniform gap is computed by taking the average gap width per roll and multiplying it by the number of tows in a course.

(1) Operators sort rolls into rolls without whiskers and rolls with whiskers. Note, a roll can be defined as the poly backing from a carbon roll (an example of which is shown in Fig. 3).
(2) For rolls with whiskers, one or more whiskers are removed from the poly backing, and the whisker length recorded.
(3) Carbon whiskers are weighed collectively.

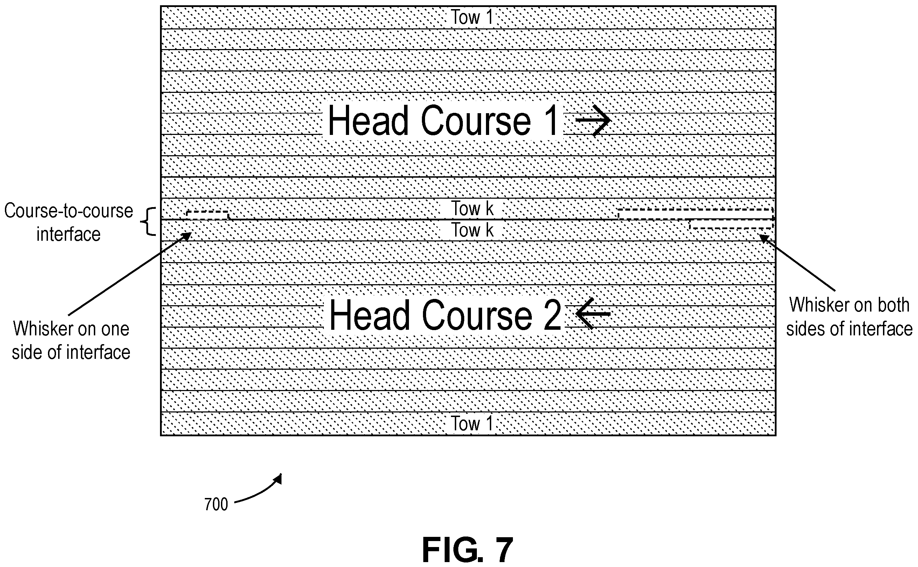

Aggregating the data, 245 of the 800 rolls (~31%) might have at least one whisker. A course can be defined as a single head pass, which can consist of one or more tows, and the course-to-course interface can be defined as the outer tow-to-tow interface between two adjacent head passes (see Fig. 7). The width of uniform gap can be computed by taking the average whisker width per roll (i.e., the average gap or missing material in a laminated tow) and assuming this average gap congregates at the course edge. The average whisker (or gap) width per roll can be based on the whisker weight and assumed areal density of carbon fiber using the following equation:

$$W = \text{Average whisker width per roll} = \frac{average\ whisker\ weight\ per\ roll}{roll\ length \times areal\ density}$$

The average gap width per roll can be multiplied by the number of tows in a head pass. This value can then be used in subsequent analysis and is referred to herein as the average whisker width.

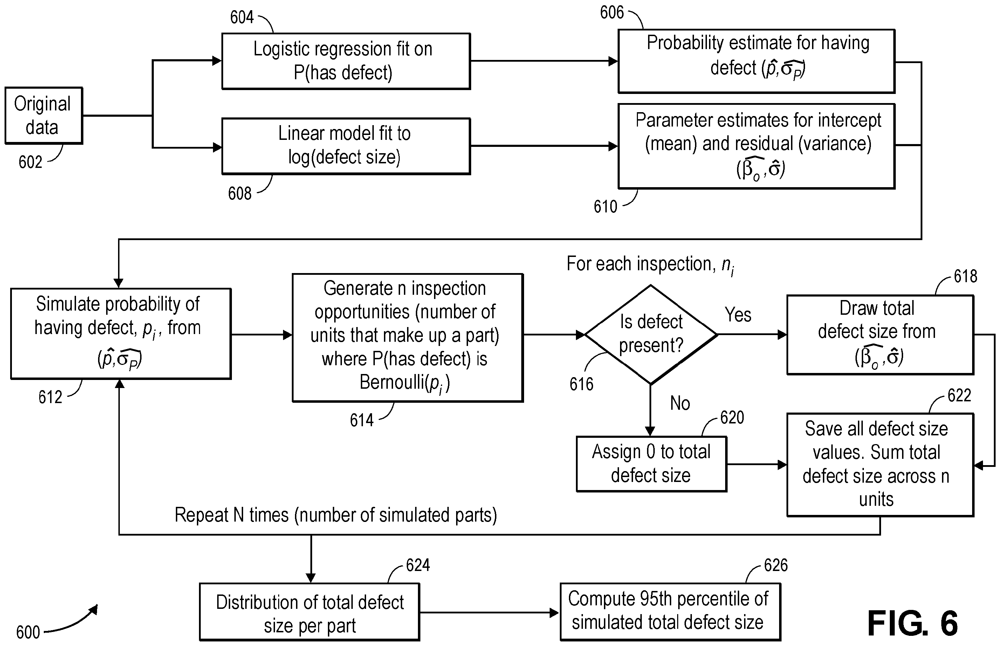

At 508, the method 500 includes statistical modeling and simulation, which is shown and described herein presently in reference to Fig. 6.

Fig. 6 is a flow diagram of a modeling and simulation method 600 for manufacturing an aircraft, where the aircraft includes an aircraft panel manufactured by an automated tape laying machine, according to various embodiments. The method 600 can be computer-implemented, due to the impracticality of performing the iterative simulation otherwise.

At 602, the method 600 includes accessing original data, e.g., the anomaly data 504 as shown and described in reference to Fig. 5. The method 600 can access such data from storage in persistent memory, for example.

At 604, the method 600 includes fitting the data to a logistic regression model of whether or not a given roll has a whisker left behind, and at 608 the method 600 include fitting the data to a linear model of anomaly size.

A significant challenge faced when developing guard bands from manufacturing data is the fact that inspection measurements can be a mixture of presence/absence of an anomaly, where continuous measurements are only available when the anomaly occurs or meets certain criteria. To account for the proportion of rolls without whiskers in the guard bands, embodiments can use a two-stage hurdle model to capture both modes of the anomaly distribution. For the hurdle model, the first component can be a model for the probability of having a roll with a whisker (or binary classifier), and the second model can be for anomaly size, e.g., total whisker length. The first model can be a generalized linear model (GLM) for the probability of a roll having a whisker, and the second model can be a log-normal model for total whisker length on an individual roll. This two-stage model allows for the capture of the entire anomaly data distribution, which yields more accurate and appropriate statistical estimates compared to simply ignoring the anomaly-free rolls or attempting to fit a single distribution to all the data.

According to some embodiments, the first model of the two-stage hurdle model can be a logistic regression model, by way of non-limiting example, of the form $P(\text{roll having whisker}) = \frac{1}{1 + e^{-(\beta_0)}}$. This first model yields estimates 606 of P(roll having whisker) along with uncertainty estimates about that probability.

The second model of the two-stage hurdle model can be a log-normal model for total whisker length on a roll, which can be, by way of non-limiting example, $\log(\text{total whisker length on roll}) \sim N(\mu, \sigma^2)$. This model provides parameter estimates 610 for mean and variance of anomaly size.

The method 600 includes a bootstrap simulation, which simulates data that accounts for uncertainty in the sampled data and the parameter estimates. The bootstrap simulation process creates a distribution of total whisker lengths on a given panel by simulating probabilities of having a whisker on a roll from the first model, and for each simulated roll with a whisker, simulating the total whisker length of that roll by taking a random draw from the second model using the estimated mean and the standard deviation to develop a distribution for total whisker length. For the ongoing example, this can be done n times (the adjusted average number of rolls assuming full usage of each roll to build a given panel) and the total whisker lengths per roll can be summed to give the total missing material length on a panel. This process can be repeated many times (e.g., 1000 times for the ongoing example) to simulate total whisker length for many simulated panels. The bootstrap simulation of the method 600 can proceed as follows.

As described above, after 602, at 604, the method 600 models the probability of a roll on a panel having a whisker (using the first model). This process produces a probability estimate of having the anomaly, at 606. Further, after 602, at 608, the method 600 models the total whisker length on a roll (using the second model). This process produces distribution parameters for total whisker length on a roll, at 610.

The method 600 then includes an iteration according to the number of simulated parts, generated at 614. For the ongoing example, n rolls can be used on a panel; thus the simulation can consider 1000 panels and n rolls per panel for a total of 1000 x n rolls. For each roll on a panel:

1. Estimate the probability of roll having a whisker using the first model, at 612.
2. Next, consider whether the previous action resulted in an anomaly, at 616. If a whisker is present, then the method 600 estimates total whisker length size using the second model based on bootstrap mean and standard deviation, at 618. Otherwise, the total anomaly size for the respective iteration step is assigned zero, at 620.

For all iteration steps, the anomaly sizes are saved in persistent memory, and their whisker length sizes summed across n rolls, at 622, to simulate total whisker length at the panel level. This provides a distribution of the total anomaly size per part, e.g., aircraft panel, at 624.

At 626, the method 600 extracts the upper 95th percentile total whisker length size from the simulated panels (1000 simulated panels for the reduction to practice). This provides an upper bound on the total whisker length on a given panel.

Returning to the description of Fig. 5, at 510, the method 500 includes obtaining the upper bound on the total whisker length on a given panel, e.g., as provided by the method 600, described above. This upper bound on total whisker length at the panel level is incorporated into the guard bands for the upper specification limit as described presently.

Incorporation of the estimates described above into guard bands for the upper specification limit involves various considerations. These include:

(1) Though whiskers occur at both intra-course and course-to-course interfaces, some embodiments (including as described for the ongoing example) consider all whiskers to occur at the course-to-course interfaces. This reflects a conservative scenario.
(2) The course average whisker width can be computed by taking the average gap width per roll and conservatively applying this to the course-to-course interface.

To develop the guard band for the upper specification limit requirement, the occurrence of a single whisker on either side of the tow adjacent to the course-to-course interface and the possibility of two whiskers lining up at the same location on the course-to-course interface can be considered. Fig. 7 illustrates these scenarios.

Fig. 7 illustrates a whisker occurring on one side and both sides of a course-to-course interface 700, according to various embodiments. In particular, Fig. 7 shows two automated tape laying machine head passes, the first moving left to right and the second moving right to left. Near the start of course 1 (left side), a whisker appears on one side of the course. At the end of the first head pass (right side), a whisker is present and continues when the head turns around to make the second pass. In this scenario, the gap due to whiskers is larger than the gap from the whisker if it occurred on only one side of the course (assuming the same whisker width) due to having missing material from whiskers on both sides of the course-to-course interface at the same location.

Returning to the description of Fig. 5, to account for the presence of whiskers either at the same location or on only one tow adjacent to the course-to-course interface, the process 500 includes modeling the presence of whiskers as a Binomial distribution where the probability of a whisker on a tow at a given location is denoted as $p95_{missing\ material}$. This value can be derived from the simulation shown and described herein in reference to Fig. 6.

At 512, the method 500 includes determining an upper bound on the proportion of tow adjacent to the course interface that is missing material. Specifically, the extracted 95th percentile for total whisker length can be adjusted to be relative to the entire panel to provide the upper bound on the proportion of tow adjacent to the course interface that is missing material.

At 514, the method 500 includes computing a final gap, accounting for undetected whisker material. For random and independent location of whiskers and assuming that at a particular location the process is at the upper specification limit and there is missing material due to whiskers, the maximum gap accounting for expected missing material due to whiskers, M, can be determined as the weighted sum of three possibilities: two whiskers at that location within the course-to-course interface, only one whisker at either tow adjacent to the course-to-course interface for a given location, and no whiskers at that location:

$$\begin{aligned}
\text{M} &= \text{Maximum Gap Accounting for Whiskers} \\
&= (\text{Max gap if two whiskers}) \times \text{Prob(Two whiskers at location)} + \\
&\quad (\text{Max gap if one whisker}) \times \text{Prob(One whisker at either location)} + \\
&\quad (\text{Max gap if no whiskers}) \times \text{Prob(No whiskers at location)}
\end{aligned}$$

The missing material due to whiskers when a whisker occurs on a tow adjacent to the course-to-course interface can be assumed to be the average whisker width computed from the raw data, at 506. Further, the missing material is two times the average whisker width (from 506) if both tows adjacent to the course-to-course interface have a whisker at the same location.

At 516, the method 500 includes computing the guard band. Denoting the amount in excess of the requirement as $\delta = |M - USL|$, the guard band limit can be set to the USL - $\delta$ to ensure the true maximum gap meets the upper specification limit with 95% confidence.

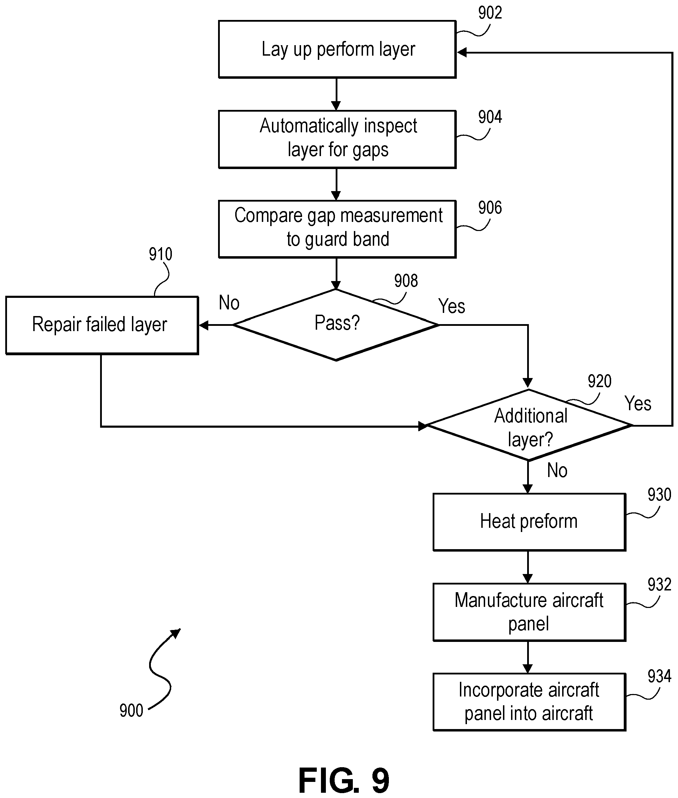

At 518, the method 500 includes using the guard bands in the manufacturing process. Examples of their usage in the manufacturing process are shown and described herein in reference to Figs. 4 and 9.

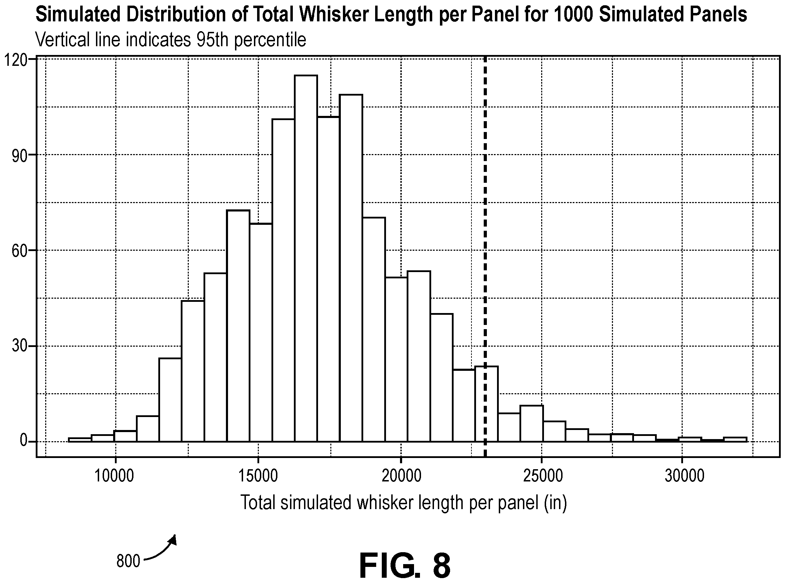

The ongoing example as shown and described herein in reference to Figs. 5 and 6 is further described presently in reference to Fig. 8, considering all whiskers as undetected material.

Fig. 8 depicts a distribution 800 of simulated total whisker length on a panel for 1000 simulated panels, according to the ongoing example. The distribution can be computed according to 624 of the method 600 as shown and described herein in reference to Fig. 6. The vertical line represents the 95th percentile, determined according to 626 of the method 600. Examples of actions used by the ongoing example to produce the distribution 800 and use it to determine guard bands are described presently.

As described herein in reference to Figs. 5 and 6, two components of the hurdle model simulation include: a first model, e.g., a probability model for whether a roll has a whisker, and a second model, e.g., a log-normal model for total whisker length. Table 2 below presents a summary of the logistic regression model with the estimated probability of having a roll with a whisker, with 95% confidence bounds on that probability. These probability draws are obtained from the fitted model to use in the bootstrap simulation.

Table 2: Summary of First Model for Probability of a Roll Having a Whisker

| Predicted Probability | Lower 95% CI | Upper 95% CI |
|---|---|---|
| 0.306 | 0.275 | 0.339 |

Table 3 provides a summary of the log-normal model for total whisker length per roll.

Table 3: Summary of Second Model Whisker Length Estimates

| Mean | Standard Deviation |
|---|---|
| 5.061 | 0.944 |

Using the two models, n rolls can be simulated per panel, with 1000 panels, for a total of 1000 x n rolls. The simulated total whisker lengths on each panel can be summed, and the process repeated for 1000 simulated panels, to provide the distribution of whisker length at the panel level. The distribution 800 shows that the 95th percentile (indicated by the vertical line) for total whisker length on a panel is 23,016.03 inches, denoted $Total_{WL}$.

A description of using the distribution 800 to determine guard bands follows. For this example, assume the length of a course-to-course interface on a panel, L, is 240,000 inches and each course-to-course interface is made up of two tows, then the total length of all tows at the course-to-course interfaces is 2 × L = 480,000 inches. Hence, the 95th percentile of the proportion of tow adjacent to the course interface that is missing material on a panel, $p95_{missing\ material}$, is $p$

$$95_{missing\ material} = \frac{Total_{WL}\ in}{2L\ in} \approx 0.0480$$ . These values are summarized in Table 4, below.

Table 4: Summary of Simulation Results

| 95th percentile for total whisker length | 95th percentile for % missing tow adjacent to course interface length |
|---|---|
| 23,016.03 | 4.80 |

Thus, assuming by way of non-limiting example an average whisker width (W) of 0.054 inches, see Table 1, the maximum gap after accounting for whiskers and assuming the process is at the upper specification limit (USL) can be determined as:

M = Max gap accounting for whiskers = (USL + 2 × 0.054) × (0.0480)² + (USL + 0.054) × 2 × [(1 - 0.0480) × 0.0480] + (USL) × (1 - 0.0480)²

Thus, the true maximum gap exceeds the upper specification requirement on gap size by $\delta$ = M - USL. Consequently, the guard band limit for maximum gap is set to USL - $\delta$ inch to ensure with 95% confidence that the true maximum gap does not exceed the upper specification limit.

Fig. 9 is a flowchart depicting a method 900 of manufacturing a composite part using a tape laying process, e.g., an automated tape laying machine, according to various embodiments. The method 900 can be at least computer implemented, due to the impracticality, or the comparative impracticality, of performing certain portions of it otherwise. The method 900 can proceed iteratively, e.g., building up carbon fiber layers of a preform, including inspecting and repairing any defective layers.

At 902, the method 900 includes laying up a carbon fiber preform layer from composite tape using a tape laying process. The actions of 902 can be performed as shown and described herein in reference to Fig. 1, for example.

At 904, the method 900 includes automatically inspecting the layer for gaps, such that a gap measurement is obtained. The automatic inspection can utilize an automated optical inspection system, which can include one or more optical sensors (e.g., a profilometer), by way of non-limiting example. Note that because whiskers can be of partial thickness, the automated optical inspection system might not be able detect missing fiber material that remains on rolls after the lay-up process.

At 906, the method 900 includes comparing the gap measurement with a gap guard band. The gap guard band can be determined according to the techniques shown and described herein in reference to Figs. 5 and 6, for example. Note that this usage of a gap guard band can account for missing material that is undetected at 904. The method 900 branches at 908 based on the comparison of 906.

If the comparison of 906 indicates that the layer does not pass, then, at 910, the layer is repaired, and control passes to 920. According to some embodiments, the actions of 906 can include performing additional testing on the layer. For example, manual inspection can be performed, e.g., visual examination of the layer.

If the comparison of 906 indicates that the preform passes, then control passes to 920.

At 920, the method 900 includes determining whether additional layers are to be added to the preform, as, in general, the preform can be manufactured using multiple sequences. If an additional layer is to be added, e.g., because the preform is incomplete, then control reverts to 902. Otherwise, if no additional layer is to be added, then control passes to 930.

At 930, the preform is heated, e.g., as shown and described herein in reference to Fig. 1, in order to harden the preform into a composite part. For example, the heating can utilize an autoclave. At 932, the method 900 includes manufacturing an aircraft part (e.g., an aircraft panel) from the composite part. The aircraft panel can be manufactured as shown and described herein in reference to Fig. 1. For example, the aircraft panel can include all or a portion of the composite part to form an upper (or lower) wing panel, one or more ribs, and/or one or more spars. At 934, the aircraft panel is incorporated into an aircraft.

Further, the current disclosure comprises embodiments according to the following clauses:

Clause 1. A method of manufacturing a composite part using a tape laying process, the method comprising:

laying up a preform layer from composite tape using a tape laying process;
inspecting the preform layer for gaps, from which a gap measurement is obtained;
comparing the gap measurement with a gap guard band, wherein the gap guard band is determined by operations comprising:

obtaining anomaly data comprising measurements of fiber that has not been deposited on a respective preform during a plurality of prior preform lay-up processes;
fitting a multi-component model to the anomaly data;
simulating a preform manufacture based on the multi-component model, from which a distribution of anomaly size per preform is determined;
calculating, based on the distribution of total anomaly size per preform, summary statistics on gap width per preform accounting for undetected anomalies; and
determining a guard band based on the summary statistics on gap width per preform accounting for undetected anomalies and based on a manufacturing requirement;

determining, with a known confidence and based on the comparing, that the preform layer complies with the manufacturing requirement;
repeating the laying up, the inspecting, the comparing, and the determining, whereby a preform comprising multiple layers is obtained; and
heating the preform, wherein a composite part is produced.

Clause 2. The method of clause 1, further comprising manufacturing an aircraft panel from the composite part.
Clause 3. The method of clause 2, further comprising incorporating the aircraft panel into an aircraft wing assembly.
Clause 4. The method of any of clauses 1 to 3, wherein the multi-component model comprises an anomaly presence model and an anomaly size model.
Clause 5. The method of any of clauses 1 to 4, further comprising:

determining, with a known confidence and based on the comparing, that a second preform layer does not comply with the manufacturing requirement; and
repairing the second preform layer.

Clause 6. The method of any of clauses 1 to 5, wherein the inspecting comprises automatically inspecting using at least one optical sensor.
Clause 7. The method of any of clauses 1 to 6, wherein the anomaly data comprises measurements of lengths of fiber that has not been deposited on a preform.

Clause 8. The method of clause 7, wherein the operations further comprise determining an upper bound on a length of fiber that has not been deposited.

Clause 9. The method of any of clauses 1 to 8, wherein the operations further comprise determining an upper bound on a proportion of a preform affected by missing, undetected fiber.

Clause 10. The method of any of clauses 1 to 9, wherein the determining the summary statistics on gap width per preform comprises accounting for missing and undetected fiber in adjacent courses.

Clause 11. A system for manufacturing a composite part, the system comprising:

a tape laying machine that iteratively lays up preform layers from composite tape to manufacture a preform; and an inspection system that inspects each preform layer for gaps, from which a respective gap measurement is obtained, compares the respective gap measurement with a gap guard band, and determines, with a known confidence and based on the comparing, that the preform layer complies with a manufacturing requirement; wherein the gap guard band is determined by operations comprising:

obtaining anomaly data comprising measurements of fiber that has not been deposited on a respective preform during a plurality of prior preform lay-up processes;

fitting a multi-component model to the anomaly data;

simulating a preform manufacture based on the multi-component model, from which a distribution of anomaly size per preform is determined;

calculating, based on the distribution of total anomaly size per preform, summary statistics on gap width per preform accounting for undetected anomalies; and

determining a guard band based on the summary statistics of gap width per preform accounting for undetected anomalies and based on the manufacturing requirement; and

an autoclave that heats the preform, wherein a composite part is produced.

Clause 12. The system of clause 11, wherein an aircraft panel is manufactured from the composite part.

Clause 13. The system of clause 12, wherein the aircraft panel is incorporated into an aircraft wing assembly.

Clause 14. The system of any of clauses 11 to 13, wherein the multi-component model comprises an anomaly presence model and an anomaly size model.

Clause 15. The system of any of clauses 11 to 14, wherein the inspection system determines, with a known confidence and based on the comparing, that a second preform layer does not comply with the manufacturing requirement, wherein the second layer preform layer is repaired.

Clause 16. The system of any of clauses 11 to 15, wherein the inspection system comprises at least one optical sensor.

Clause 17. The system of any of clauses 11 to 16, wherein the anomaly data comprises measurements of lengths of fiber that has not been deposited on a preform.

Clause 18. The system of clause 17, wherein the operations further comprise determining an upper bound on a length of fiber that has not been deposited.

Clause 19. The system of any of clauses 11 to 18, wherein the operations further comprise determining an upper bound on a proportion of a preform affected by missing, undetected fiber.

Clause 20. The system of any of clauses 11 to 19, wherein the determining the summary statistics on gap width per preform comprises accounting for missing and undetected fiber in adjacent courses.

Note that although embodiments are described herein in reference to manufacturing aircraft, aircraft wing panels, composite parts, and preforms, embodiments are not so limited. Any manufacture of any vehicle or non-vehicle that includes composite parts as described here can utilize the disclosed techniques. Further, although a fixed-wing aircraft is shown in Fig. 1, embodiments are not limited to fixed-wing aircraft parts. Any aircraft that include composite parts can utilize the disclosed techniques, e.g., rotary-wing aircraft, vertical take-off and landing (VTOL) aircraft, unmanned air vehicles (e.g., drones), rockets, spacecraft, etc. Thus, embodiments can be used to establish and use guard bands for any of a variety of manufactured composite parts.

Some embodiments provide for assessing a product against specification requirements in a manufacturing environment to ensure consistent, safe, and high-quality product. Some embodiments can be used even though anomalies due to an aspect of a process can be undetectable in process and the requirements are complex such that observing the anomaly post process does not directly translate in a way such that a decision about the conformity of the part against the requirements can be made easily.

Certain examples can be performed using a computer program or set of programs. The computer programs can exist in a variety of forms both active and inactive. For example, the computer programs can exist as software program(s) comprised of program instructions in source code, object code, executable code or other formats; firmware program(s), or hardware description language (HDL) files. Any of the above can be embodied on a transitory or non-transitory computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), flash memory, and magnetic or optical disks or tapes.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented using computer readable program instructions that are executed by an electronic processor.

These computer readable program instructions can be provided to a processor of a general-purpose computer, special purpose computer, or other programmable data processing apparatus to produce a machine, such that the instructions, which execute via the electronic processor of the computer or other programmable data processing apparatus, create means for implementing the functions/acts specified in the flowchart and/or block diagram block or blocks. These computer readable program instructions can also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

In embodiments, the computer readable program instructions can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the C programming language or similar programming languages. The computer readable program instructions can execute entirely on a user's computer, partly on the user's computer, as a stand-alone software package, partly on the user's computer and partly on a remote computer or entirely on the remote computer or server.

As used herein, the terms "A or B" and "A and/or B" are intended to encompass A, B, or {A and B}. Further, the terms "A, B, or C" and "A, B, and/or C" are intended to encompass single items, pairs of items, or all items, that is, all of: A, B, C, {A and B}, {A and C}, {B and C}, and {A and B and C}. The term "or" as used herein means "and/or."

As used herein, language such as "at least one of X, Y, and Z," "at least one of X, Y, or Z," "at least one or more of X, Y, and Z," "at least one or more of X, Y, or Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item can be present.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. § 112(f). However, for any claims containing elements designated in any other manner, it is intended that such elements are not to be interpreted under 35 U.S.C. § 112(f).

While the invention has been described with reference to the exemplary examples thereof, those skilled in the art will be able to make various modifications to the described examples without departing from the true spirit and scope. The terms and descriptions used herein are set forth by way of illustration only and are not meant as limitations. In particular, although the method has been described by examples, the steps of the method can be performed in a different order than illustrated or simultaneously. Those skilled in the art will recognize that these and other variations are possible within the spirit and scope as defined in the following claims and their equivalents.

**Claims**

1.    A method (900) of manufacturing a composite part using a tape laying process, the method comprising:

   laying up (902) a preform layer from composite tape using a tape laying process;
   inspecting (904) the preform layer for gaps, from which a gap measurement is obtained;
   comparing (906) the gap measurement with a gap guard band, wherein the gap guard band is determined by operations comprising:

obtaining anomaly data (504) comprising measurements of fiber (206) that has not been deposited on a respective preform during a plurality of prior preform lay-up processes;

fitting a multi-component model to the anomaly data;

simulating a preform manufacture based on the multi-component model, from which a distribution of anomaly size per preform is determined;

calculating, based on the distribution (800) of total anomaly size per preform, summary statistics on gap width per preform accounting for undetected anomalies; and

determining a guard band based on the summary statistics on gap width per preform accounting for undetected anomalies and based on a manufacturing requirement;

determining, with a known confidence and based on the comparing, that the preform layer complies with the manufacturing requirement;

repeating the laying up, the inspecting, the comparing, and the determining, whereby a preform comprising multiple layers is obtained; and

heating (930) the preform, wherein a composite part is produced.

2. The method of claim 1, further comprising manufacturing an aircraft panel (120) from the composite part.

3. The method of claim 2, further comprising incorporating the aircraft panel into an aircraft wing assembly.

4. The method of any of claims 1 to 3, wherein the multi-component model comprises an anomaly presence model and an anomaly size model.

5. The method of any of claims 1 to 4, further comprising:

determining, with a known confidence and based on the comparing, that a second preform layer does not comply with the manufacturing requirement; and

repairing the second preform layer.

6. The method of any of claims 1 to 5, wherein the inspecting comprises automatically inspecting using at least one optical sensor.

7. The method of any of claims 1 to 6, wherein the anomaly data comprises measurements of lengths of fiber that has not been deposited on a preform.

8. The method of claim 7, wherein the operations further comprise determining an upper bound on a length of fiber that has not been deposited.

9. The method of any of claims 1 to 8, wherein the operations further comprise determining an upper bound on a proportion of a preform affected by missing, undetected fiber (206).

10. The method of any of claims 1 to 9, wherein the determining the summary statistics on gap width per preform comprises accounting for missing and undetected fiber (206) in adjacent courses.

11. A system for manufacturing a composite part, the system comprising:

a tape laying machine that iteratively lays up preform layers from composite tape to manufacture a preform; and

an inspection system that inspects each preform layer for gaps, from which a respective gap measurement is obtained, compares the respective gap measurement with a gap guard band, and determines, with a known confidence and based on the comparing, that the preform layer complies with a manufacturing requirement; wherein the gap guard band is determined by operations comprising:

obtaining anomaly data (504) comprising measurements of fiber (206) that has not been deposited on a respective preform during a plurality of prior preform lay-up processes;

fitting a multi-component model to the anomaly data;

simulating a preform manufacture based on the multi-component model, from which a distribution of anomaly size per preform is determined;

calculating, based on the distribution of total anomaly size per preform, summary statistics on gap width per preform accounting for undetected anomalies; and

determining a guard band based on the summary statistics of gap width per preform accounting for undetected anomalies and based on the manufacturing requirement; and

an autoclave that heats the preform, wherein a composite part is produced.

12. The system of claim 11, wherein the multi-component model comprises an anomaly presence model and an anomaly size model.

13. The system of claim 11 or 12, wherein the inspection system determines, with a known confidence and based on the comparing, that a second preform layer does not comply with the manufacturing requirement, wherein the second layer preform layer is repaired.

14. The system of any of claims 11 to 13, wherein the inspection system comprises at least one optical sensor.

15. The system of any of claims 11 to 14, wherein the anomaly data comprises measurements of lengths of fiber that has not been deposited on a preform.

FIG. 1

FIG. 2

Poly Backing
Removal Spindle

Carbon Roll

302

Whisker

Poly Backing from
one carbon roll

304

**FIG. 3**

Guard-band

Upper
Spec Limit

Measured
value

Uncertainty
zone

400

# FIG. 4

FIG. 5

EP 4 667 200 A1

FIG. 6

**FIG. 7**

EP 4 667 200 A1

Simulated Distribution of Total Whisker Length per Panel for 1000 Simulated Panels
Vertical line indicates 95th percentile

Total simulated whisker length per panel (in)

800

**FIG. 8**

EP 4 667 200 A1

902
Lay up perform layer

904
Automatically inspect
layer for gaps

906
Compare gap measurement
to guard band

910
Repair failed layer

908
Pass?

No

Yes

920
Additional
layer?

Yes

No

930
Heat preform

932
Manufacture aircraft
panel

934
Incorporate aircraft
panel into aircraft

900

FIG. 9

**EUROPEAN SEARCH REPORT**

Application Number

EP 25 16 8210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/097728 A1 (ENGELBART ROGER W [US] ET AL) 7 April 2016 (2016-04-07) * paragraphs [0022] - [0023], [0026], [0042]; claims 8-9; figures 1,3 * | 11,14 | INV. B29C70/54 B29C70/38 B64C1/12 B64C3/26 |
| A | US 5 562 788 A (KITSON LEE E [US] ET AL) 8 October 1996 (1996-10-08) * claims 1-6,11; figures 1,11 * | 1-15 | B64F5/60 G01N21/88 G01N21/84 |
| A | US 2016/341671 A1 (MAASS DAVID [US]) 24 November 2016 (2016-11-24) * paragraphs [0093] - [0094]; claim 12; figures 1,5-9 * | 1-15 | |
| A | EP 4 197 755 A1 (BOEING CO [US]) 21 June 2023 (2023-06-21) * paragraphs [0047], [0074], [0078]; claims 1,7,9 * | 1-15 | |
| A | US 2015/254835 A1 (DORRIS STEVEN A [US] ET AL) 10 September 2015 (2015-09-10) * paragraphs [0011], [0040], [0045], [0052]; claims 1,19; figure 4 * | 1-15 | TECHNICAL FIELDS SEARCHED (IPC) B29C B64C B64F G01N |
| A | US 2009/199948 A1 (KISCH ROBERT A [US]) 13 August 2009 (2009-08-13) * paragraph [0035]; claims 1,19; figure 8 * | 1-15 | |

The present search report has been drawn up for all claims

| Place of search | Date of completion of the search | Examiner |
|---|---|---|
| The Hague | 8 September 2025 | Traiforos, Neoklis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EP 4 667 200 A1

## ANNEX TO THE EUROPEAN SEARCH REPORT
## ON EUROPEAN PATENT APPLICATION NO.

EP 25 16 8210

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2025

| Patent document cited in search report | | Publication date | Patent family member(s) | | Publication date |
|---|---|---|---|---|---|
| US 2016097728 | A1 | 07-04-2016 | CN | 105487486 A | 13-04-2016 |
| | | | EP | 3007022 A2 | 13-04-2016 |
| | | | JP | 6782531 B2 | 11-11-2020 |
| | | | JP | 2016075663 A | 12-05-2016 |
| | | | US | 2016097728 A1 | 07-04-2016 |
| US 5562788 | A | 08-10-1996 | NONE | | |
| US 2016341671 | A1 | 24-11-2016 | US | 2016341671 A1 | 24-11-2016 |
| | | | WO | 2016186682 A1 | 24-11-2016 |
| EP 4197755 | A1 | 21-06-2023 | CN | 116214961 A | 06-06-2023 |
| | | | EP | 4197755 A1 | 21-06-2023 |
| | | | JP | 2023082692 A | 14-06-2023 |
| | | | US | 2023173748 A1 | 08-06-2023 |
| US 2015254835 | A1 | 10-09-2015 | CA | 2883726 A1 | 10-09-2015 |
| | | | CN | 104915635 A | 16-09-2015 |
| | | | EP | 2918400 A2 | 16-09-2015 |
| | | | ES | 2844203 T3 | 21-07-2021 |
| | | | JP | 2015172576 A | 01-10-2015 |
| | | | US | 2015254835 A1 | 10-09-2015 |
| US 2009199948 | A1 | 13-08-2009 | NONE | | |

EPO FORM P0459

For more details about this annex : see Official Journal of the European Patent Office, No. 12/82

24